# EUROPEAN PATENT SPECIFICATION

(11) **EP 2 583 508 B1**
(45) Date of publication and mention of the grant of the patent: **19.11.2014**
(21) Application number: 11711874.5
(22) Date of filing: 30.03.2011
(51) Int. Cl.: H04W 68/00, H04W 28/06, H04W 76/02, H04W 88/14, H04W 88/16

(54) **P-GW/GGSN ISSUED PAGING REQUESTS**
ÜBER P-GW/GGSN AUSGEGEGEBENE FUNKRUFANFRAGEN
DEMANDES DE RADIOMESSAGERIE ÉMISES PAR P-GW/GGSN

(30) Priority: 17.06.2010 US 355705 P
(43) Date of publication of application: 24.04.2013
(73) Proprietor: Telefonaktiebolaget LM Ericsson (publ), 164 83 Stockholm (SE)
(72) Inventor: YANG, Yong, S-431 47 Mölndal (SE); RYDNELL, Gunnar, S-421 59 Västra Frölunda (SE); SANDER, Ann-Christine, S-421 65 Västra Frölunda (SE)
(74) Representative: Vejgaard, Christian
(86) International application number: PCT/EP2011/054930
(87) International publication number: WO 2011/157460

(56) References cited:
- NEC: "EPC node failure", 3GPP DRAFT; C4-101116, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Kyoto; 20100510, 17 May 2010 (2010-05-17), XP050411725, [retrieved on 2010-05-17]
- "LTE; General Packet Radio Service (GPRS) enhancements for Evolved Universal Terrestrial Radio Access Network (E-UTRAN) access (3GPP TS 23.401 version 9.5.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V9.5.0, 14 June 2010 (2010-06-14), XP014047191,

## Description

### TECHNICAL FIELD

Example embodiments are related to the optimization of paging and mobility management procedures in wireless communications.

### BACKGROUND

In a typical cellular system, also referred to as a wireless communications network, wireless terminals, also known as mobile stations and/or User Equipment units (UEs) communicate via a Radio Access Network (RAN) to one or more core networks. The wireless terminals can be mobile stations or user equipment units such as mobile telephones also known as "cellular" telephones, and laptops with wireless capability, e.g., mobile termination, and thus can be, for example, portable, pocket, hand-held, computer-comprised, or car-mounted mobile devices which communicate voice and/or data with radio access network.

The radio access network covers a geographical area which is divided into cell areas, with each cell area being served by a base station, e.g., a Radio Base Station (RBS), which in some networks is also called "NodeB" or "B node" and which in this document also is referred to as a base station. A cell is a geographical area where radio coverage is provided by the radio base station equipment at a base station site. Each cell is identified by an identity within the local radio area, which is broadcast in the cell. The base stations communicate over the air interface operating on radio frequencies with the user equipment units within range of the base stations.

In some versions of the radio access network, several base stations are typically connected, e.g., by landlines or microwave, to a Radio Network Controller (RNC). The radio network controller, also sometimes termed a Base Station Controller (BSC), supervises and coordinates various activities of the plural base stations connected thereto. The radio network controllers are typically connected to one or more core networks.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) access technology. UMTS Terrestrial Radio Access Network (UTRAN) is essentially a radio access network using wideband code division multiple access for user equipment units (UEs). The Third Generation Partnership Project (3GPP) has undertaken to evolve further the UTRAN and GSM based radio access network technologies. Long Term Evaluation (LTE) together with Evolved Packet Core (EPC) is the newest addition to the 3GPP family.

Mobility management is an important function in maintaining cellular networks. The goal of mobility management is to track where cellular phones, or User Equipments (UEs), are located in order for mobile phone services to be provided to the various UEs comprised in any given network. The network nodes which are primarily responsible for mobility management are the Mobility Management Entity (MME) and the Serving General Packet Radio Service Support Node (SGSN).

A proposal or request for future studies dealing with EPC node failures is provided in NEC: "EPC node failure", 3GPP DRAFT; C4-101116, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. CT WG4, no. Kyoto; 20100510, 17 May 2010 (2010-05-17), XP050411725.

A further discussion on EPC node failures is provided in "LTE; General Packet Radio Service (GPRS) enhancements for Evolved Universal Terrestrial Radio Access Network (E-UTRAN) access (3GPP TS 23.401 version 9.5.0 Release 9)", TECHNICAL SPECIFICATION, EUROPEAN TELECOMMUNICATIONS STANDARDS INSTITUTE (ETSI), 650, ROUTE DES LUCIOLES; F-06921 SOPHIA-ANTIPOLIS; FRANCE, vol. 3GPP SA 2, no. V9.5.0, 14 June 2010 (2010-06-14), XP014047191.

### SUMMARY

In providing mobility management, an important consideration is reducing the amount of network resource utilization. The inventors have appreciated a need to reduce network utilization with respect to UE or MTC device paging. Currently, paging methods involving initiation from the MME and SGSN network nodes do not provide much benefit to other nodes of the Core Network.

Furthermore, problems arise when an MME restart occurs. When the MME restarts, it looses all information about any UEs which may be attached to the network. After the MME recovers, it will send an incremented Restart Account to the S-GWs which are connected to the MME. When the S-GW receives the incremented Restart Counter, it will delete all the PDN connections associated with the restarted MME, and S-GW may also inform the P-GW to remove any corresponding PDN connections. The removal of PDN connections may result in idle mode UEs being unreachable for downlink data. The period of UE unreachability may last until the idle UEs perform a Periodic TAU when an associated Periodic Tracking Area timer expires. Therefore, before a Periodic TAU is performed, the UE will not be able to receive downlink data. Once a Periodic TAU is performed, the MME will force the UE to re-attach to the network.

Optimized paging may be particularly useful for low mobility users, for example machine to machine (M2M) communications, where UEs or MTC devices may often be in an idle state. Examples of low mobility may comprise (1) where an MTC does not move frequently and/or moves within a small area (e.g., health monitoring at home), (2) where an MTC does not move frequently but may move within a wide area (e.g., mobile sales terminals), and (3) when an MTC device is typically in a fixed location (e.g., water metering).

Thus, at least one object of the example embodiments presented herein may be to provide a system and method enabling optimized communication in a wireless network. This object may have the technical effect of reducing network resource utilization.

Thus, some example embodiments may be directed towards allowing a Packet Data Network Gateway (P-GW) network node or a Gateway General Packet Radio Service Support Node (GGSN) network node to initiate a paging procedure.

Some example embodiments may comprise a method in a wireless communications P-GW or GGSN network node. The method may comprise obtaining information which may indicate that a page request needs to be issued. The information may come in the form of an information element or flag setting. The information may also be in the form of a message sent from another network node. The method may further comprise formulating the page request within the P-GW or GGSN network node, and sending the page request to, for example, a Serving Gateway (S-GW) network node.

Some example embodiments may further comprise obtaining the information based on a service description of an associated application function.

Some example embodiments may further comprise obtaining a mobility and/or idle status of a User Equipment.

Some example embodiments may further comprise selecting the S-GW network node.

Some example embodiments may further comprise obtaining the information which may be related to a Mobility Management Entity (MME) or a Serving General Packet Radio Service Support Node (SGSN) network node restart and/or a User Equipment (UE) idle state.

Some example embodiments may further comprise sending a delete session response to the S-GW network node.

Some example embodiments may further comprise sending location specific parameters. Examples of location specific parameters may include, but are not limited to, an International Mobile Subscriber Identity (IMSI), a Tracking Area Index (TAI), duration of a Packet Data Network (PDN) connection, and/or a periodic Tracking Area Update (TAU) timer. It should be appreciated that any other location parameters known in the art may be utilized.

Some example embodiments may also comprise sending the paging request in a Downlink Data Notification message or a General Packet Radio Service Tunnelling Protocol (GTP) specific message.

Some example embodiments may be directed towards a Packet Data Network Gateway (P-GW) network node or a Gateway General Packet Radio Service Support Node (GGSN) network node in a wireless communication network. The node may comprise a communications interface, for example receiving and transmitting units, that may be configured to receive information indicating that a page request needs to be issued. The node may also comprise a processing unit that may be configured to formulate the page request within the P-GW or GGSN network node. The communications interface may be further configured to send the page request to a Serving Gateway (S-GW) network node.

In some example embodiments the node may be further configured to perform the any steps of the method described above.

Some example embodiments may be directed towards a communications system comprising a Packet Data network Gateway (P-GW) network node or a Gateway General Packet Radio Service Support Node (GGSN), such as the nodes described above.

Some example embodiments may comprise a computer readable storage medium which may be encoded with computer executable instructions, wherein the instructions, when executed by a Packet Data network Gateway (P-GW) network node or a Gateway General Packet Radio Service Support Node (GGSN) network node, may perform any one of the steps of the method described above.

### DEFINITIONS

- AF: Application Function
- 3GPP: Third Generation Partnership Project
- BSC: Base Station Controller
- DNS: Domain Name System
- EDGE: Enhanced Data rates for GSM Evolution
- eNB: Evolved Node B
- EPC: Evolved Packet Core
- EPS: Evolved Packet System
- E-UTRAN: Evolved UTRAN
- GERAN: GSM EDGE Radio Access Network
- GGSN: Gateway GPRS Support Node
- GPRS: General Packet Radio Service
- GSM: Global System for Mobile communications
- GTP: General Packet Radio Service Tunnelling Protocol
- IE: Information Element
- IMSI: International Mobile Subscriber Identity
- IP-CAN: IP Connectivity Access Network
- LTE: Long Term Evolution
- M2M: Machine to Machine
- MME: Mobility Management Entity
- MTC: Machine Type Communication
- PCC: Policy and Charging Control
- PCEF: Policy and Charging Enforcement Function
- PCRF: Policy and Charging Rules Function
- PDN: Packet Data Network
- PDP: Packet Data Protocol
- P-GW: PDN Gateway
- QoS: Quality of Service
- RAI: Routing Area Index
- RAN: Radio Access Network
- RBS: Radio Base Station
- RNC: Radio Network Controller
- SGSN: Serving GPRS Support Node
- S-GW: Serving Gateway
- TAI: Tracking Area Index
- TAU: Tracking Area Update
- UE: User Equipment
- UMTS: Universal Mobile Telecommunications System
- UTRAN: Universal Terrestrial Radio Access Network
- WCDMA: Wideband Code Division Multiple Access

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 is a schematic of a wireless network;
FIG. 2 is a message sequence diagram illustrating a downlink data transfer to an idle User Equipment;
FIGS. 3A and 3B are schematics of network nodes which may utilize some of the example embodiments presented herein; and
FIGS. 4 and 5 are message sequence diagrams illustrating paging procedures utilizing the network node of FIGS. 3A and 3B, according to some of the example embodiments.

### DETAILED DESCRIPTION

In the following description, for purposes of explanation and not limitation, specific details are set forth, such as particular components, elements, techniques, etc. in order to provide a thorough understanding of the example embodiments. However, it will be apparent to one skilled in the art that the example embodiments may be practiced in other manners that depart from these specific details. In other instances, detailed descriptions of well-known methods and elements are omitted so as not to obscure the description of the example embodiments.

### INTRODUCTION

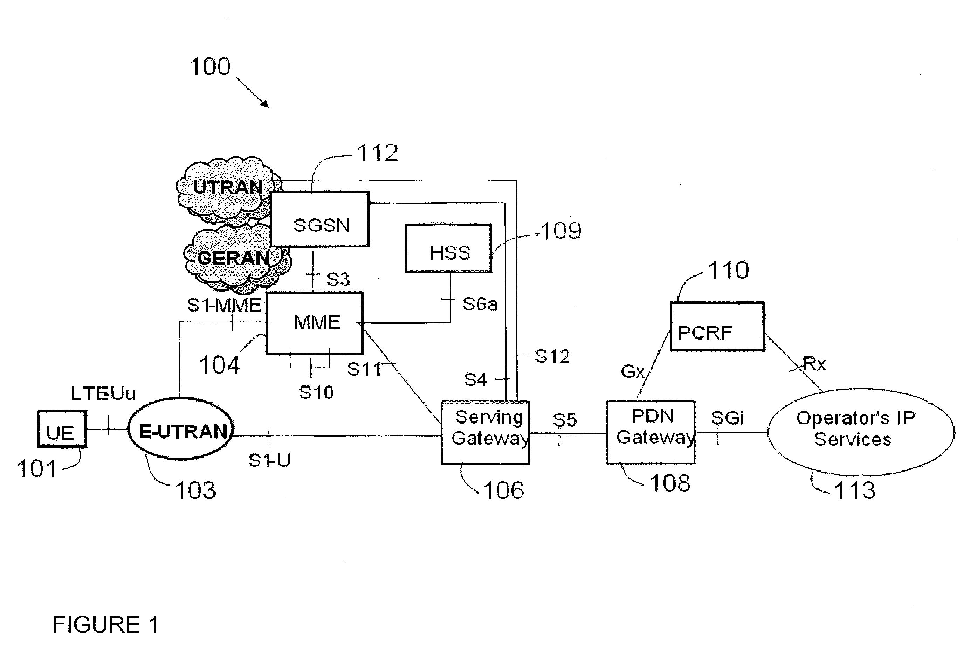

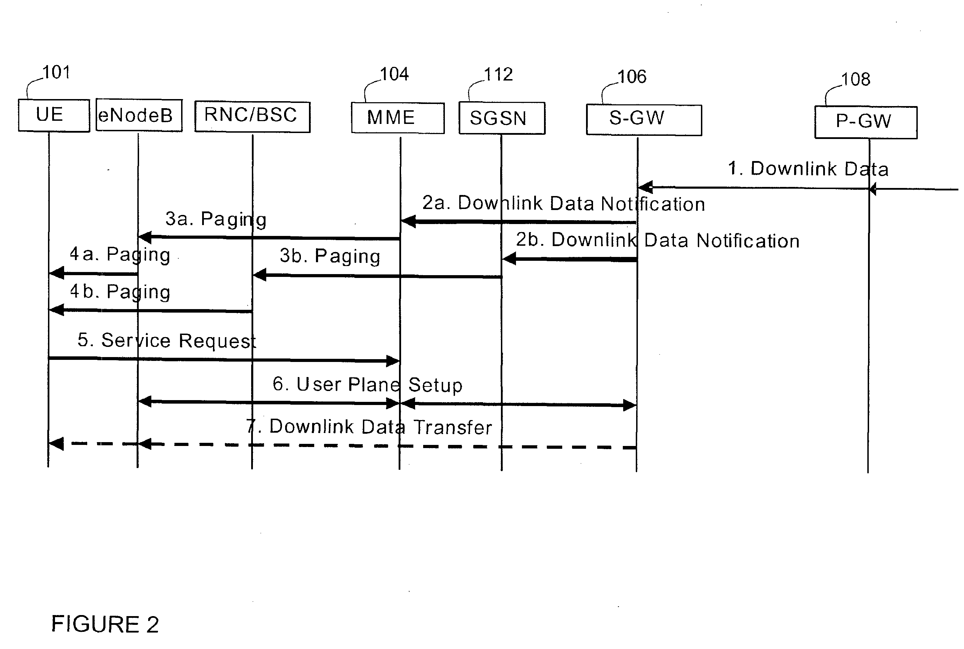

Figure 1 is an example of a wireless communications network. Figure 2 is message sequence diagram illustrating a prior art example of a downlink data transfer to an idle state User Equipment (UE).

As shown in Figure 2, a P-GW 108 (or alternatively a GGSN) may be configured to send downlink data to an S-GW 106 (message 1). Such a message may be the result of an operator or application function 113 attempting to send data to a UE 101. The S-GW 106 may in turn send a notification message to a MME 104 or a SGSN 112 (message 2a, 2b). Thereafter, it is the MME 104 or SGSN 112 network nodes which issue a paging request (message 3a, 3b). The issued paging request may be forwarded to the UE 101 via an eNodeB or RNC network nodes (message 4a, 4b). Once the idle UE 101 has been reached, the UE 101 may reattach to the network and the data may be transferred (messages 5-7).

As shown in Figure 2, current paging solutions involve paging requests formulated in the MME and SGSN network nodes. Such methods do not efficiently utilize network resources. One example instance of where prior art methods fails is when an MME network node restarts. During an MME restart all UE location information may be lost. Thus, a UE in an idle mode may not be reachable through the network until a TAU has been performed. This is particularly trouble some for low mobility UEs which may frequently enter an idle mode.

Thus, example embodiments presented herein are directed towards the optimization of paging. Some example embodiments may comprise the use of a P-GW or GGSN initiated paging scheme. Some of the example embodiments presented herein may result in the saving of memory allocated in EPC nodes (e.g., MME, S-GW and P-GW) and MTC type devices or other UEs with low mobility (e.g., deterministic mobility pattern, roaming within the same TAI list) or no mobility. It should be appreciated that while examples provided herein are related to an EPC system, all of the disclosed example embodiments may be applied to a GPRS system.

The example embodiments presented herein may be applied for devices or users with low or no mobility. Low mobility may be devices or users which (1) do not move frequently and/or move within a small area (e.g., health monitoring at home); (2) do not move frequently but may move within a wide area (e.g., mobile sales terminals); and (3) are in a fixed location (e.g., water metering). It should be appreciated that the example embodiments may also be applied for any other form of network paging.

### NODE STRUCTURE

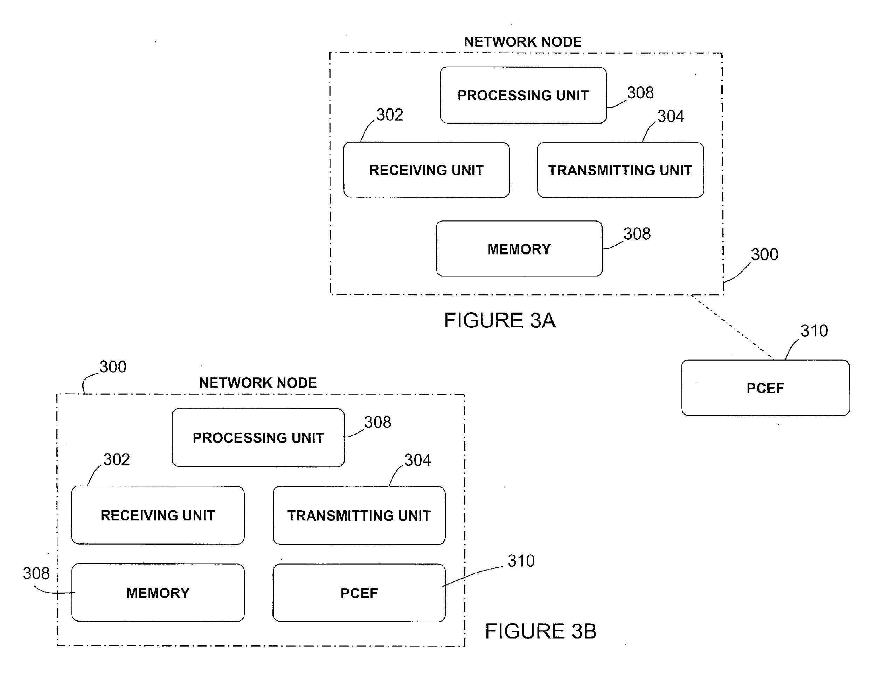

Figures 3A and 3B illustrate example of a P-GW or GGSN network node 300 which may incorporate some of the example embodiments presented herein. As shown in Figure 3, node 300 may comprise a receiving 302 and transmitting 304 units configured to receive and transmit, respectively, any form of communications within a network. It should be appreciated that the receiving 302 and transmitting 304 units may be comprised as a single transceiving unit. It should further be appreciated that the receiving and transmitting units, or transceiving unit, may be in the form of any input/output communications port known in the art.

The network node 300 may further comprise at least one memory unit 306 that may be in communication with the receiving 302 and transmitting 304 units. The memory unit 306 may be configured to store received or transmitted data and/or executable program instructions. The memory unit 306 may be any suitable type of computer readable memory and may be of volatile and/or non-volatile type.

The node 300 may further comprise a processing unit 308. The processing unit may be any suitable type of computation unit, e.g. a microprocessor, digital signal processor (DSP), field programmable gate array (FPGA), or application specific integrated circuit (ASIC). The processing unit 308 may be configured to formulate page requests. The processing unit may be further configured to determine the mobility status of a user.

Additionally, the node 300 may comprise a PCEF component 310. It should be appreciated that the PCEF component 310 may be located within the network node as shown in Figure 3B. Alternatively, the PCEF component 310 may be located externally from the node 300 as shown in Figure 3A.

### EXAMPLE USE CASE ONE - SERVICE DESCRIPTION BASED PAGING

Use cases will be described herein in order to illustrate some of the example embodiments. It should be appreciated that the use cases are presented for the purpose of illustration and the example embodiments may be applied to any situation in which a device or user is paged.

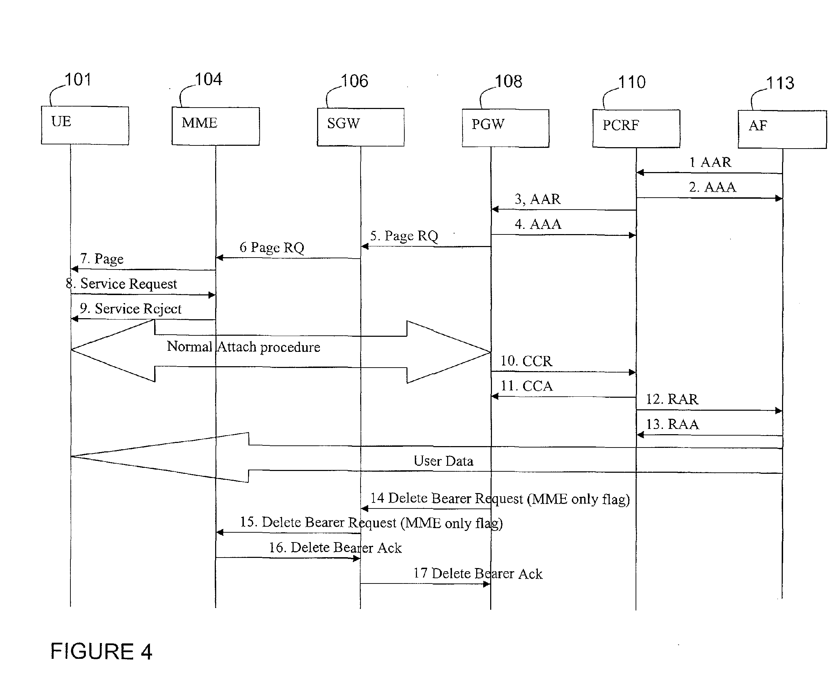

Figure 4 illustrates a message sequence diagram according to some example embodiments when an AF service request is made to a UE 101 which does not have a PDN connection to the network. In such instances, a paging procedure in the PCEF 310 may be invoked when the PCRF 110 authorizes a PCC rule which can be based on a service description initiated by an AF 113, or by any other means. This PCC rule indicates to PCEF 310 that a PDN connection may need to be established. The PCC rule may comprise parameters useful in issuing a paging request such as IMSI, or a paging area (TA list). It should be appreciated that any location based parameters may be employed. The PCEF 310 may reside in either the P-GW or GGSN.

In the 3GPP PCC architecture, an IP-CAN session is an association between a UE represented by an IPv4 and/or an IPv6 address, UE identity information (if available), and a PDN represented by a PDN ID (e.g. an APN). An IP-CAN session incorporates one or more IP-CAN bearers. Support for multiple IP-CAN bearers per IP-CAN session is IP-CAN specific. Furthermore, an IP-CAN session may exist as long as UE IP addresses are established and announced to the IP network.

"IP-CAN domain" may represent a set of access network entities which may be dependent on IP-CAN type, i.e. IP connectivity access type, e.g. for 3GPP EPS, IP-CAN domain may comprise eNodeB, MME, S-GW, P-GW and so on. The term of IP-CAN domain is used throughout this document.

The Evolved Packet System (EPS) may apply to the PCC for a QoS policy and charging control. PCC functionality may be present in the AF, PCEF, and/or PCRF. An EPS supports both PCEF and PCRF functionality to enable dynamic policy and charging control by means of installation of PCC rules based on user and service. During E-UTRAN initial attach procedure, the PCEF may initiate a diameter session for the PDN connection between PCEF and PCRF. In addition in case of PMIP based S5/S8 interface, the BBERF must also setup a diameter session for that PDN connection.

It should be appreciated that the same principals apply to GPRS system. The GPRS IP-CAN may incorporate GPRS over GERAN and UTRAN; the PDP context may be used to provide an information transmission path of defined capacity (QoS) as an IP-CAN bearer. During IP-CAN session establishment, i.e., Primary PDP Context activation procedure, the PCEF may setup a diameter session for the IP-CAN session between PCEF and PCRF.

As shown in Figure 4, an AF/MTC server 113 may initiate a new Rx session for communication, for example MTC service (downlink traffic), by sending a message to the PCRF 110 (message 1). The message may comprise an IMSI and location info (e.g., TAI, duration of the PDN connection, Periodic TAU timer using AAR). It should be appreciated that any other form of location information known in the art may be provided. The selection of PCRF may be pre-configured.

Thereafter, the PCRF 110 may acknowledge the request if it is OK based on the subscription (message 2). The PCRF then may select a P-GW (or PCEF) based on the configuration. The PCRF may make a policy decision and may build a PCC rule including IMSI and location information (e.g. TAI, Time Control for the PCC rule and any other parameters). Thereafter, the PCRF 110 may send an acknowledgement request to the selected P-GW node 108 (message 3). The P-GW/PCEF may receive the request at the receiving unit 302. The P-GW/PCEF may acknowledge the new Policy decision which may be sent with transmitting unit 304 (message 4).

The P-GW/PCEF may select a proper S-GW 106. The purpose of the selection may be to use a S-GW that is geographically or topographically optimal, e.g., such that there is a smaller probability that the UE will need to change the current S-GW in the future. Furthermore, S-GW selection allows a UE's TA list to be confined within one S-GW, for load balancing reasons or other reasons.

There may be several methods for selecting the S-GW. The following are examples of such methods: (1) by using a DNS query in the P-GW; (2) by using a default S-GW for the incoming packet or PCRF request based on some additional criteria, e.g. TA, UE IMSI (number series) etc.; and (3) by using the S-GW who has been recorded for some reason in the P-GW (e.g. it was sending "Delete Session Request" message).

In the first example method, the P-GW 108 may use information received e.g. from the PCRF 110 in a DNS query or saved information, to construct a DNS string. The DNS string may comprise information about the TAI or RAI of the UE if it is available. The syntax of a DNS string in EPC may be according to standard protocol. The Domain Name Service may resolve a DNS string into a list of possible S-GW addresses which may serve the UE and the P-GW can select a S-GW from this list. It should be appreciated that any form of S-GW selection may be employed.

Once a S-GW has been selected, the P-GW may send a paging message using a Downlink Data Notification or a new GTP message with IMSI and TAI (or TA list) with transmitting unit 304 (message 5). It should be appreciated that the paging message may be formulated using processing unit 308. The paging message may also be formulated using any information stored in memory unit 306, as well as information provided by the PCEF. Furthermore, the formulated paging message may be provided with the use of any information sent to the P-GW node.

Once the S-GW has received the request, the S-GW may select an MME. Information in the Downlink Data Notification or GTP message, such as TAI, TA list, or IMSI, may be used in the MME Selection function. Any form of MME selection may be employed.

Once an MME 104 has been selected, the S-GW may forward the page request (message 6). Thereafter, the MME 104 may page the UE 101 using IMSI and location information supplied (message 7). Upon receiving the page request, the UE may send a service request to the MME 104 (message 8). The service request may be rejected by MME 104 since there is no PDN connection available in MME 104. Therefore, the UE has to re-attach to the EPS by sending an attach request where normal attach procedures may apply (message 9).

The P-GW 108 may provide information that the UE/bearer is available for the PCC rule (CCR) (message 10). The PCRF may acknowledge the information by sending an acknowledgment message (message 11). The PCRF 110 may inform the AF/MTC server 113 the bearer is available for downlink traffic via a request message (message 12). The AF 113 may acknowledge the notification via an acknowledgement message (message 13). The downlink data may thereafter be delivered.

Once the data transfer is complete, the P-GW 108 may send a Delete Bearer Request using, for example, Linked Evolved Packet System Bearer Identification (LBI) to delete the PDN connection based on the time control in the PCC rule. Within Delete Bearer Request, a new flag may indicate that the MME shall delete PDN connection locally, such that location information of the MME may still be stored within other nodes of the network (message 14).

The S-GW 106 may thereafter forward the Delete Bearer Request to the MME 104 (message 15). The MME 104 may then delete the PDN connection locally. The MME may then acknowledge that PDN connection has been removed (message 16). The S-GW 106 may also acknowledge that PDN connection has been removed (message 17).

### USER CASE TWO: PAGING AS A RESULT OF AN MME RESTART

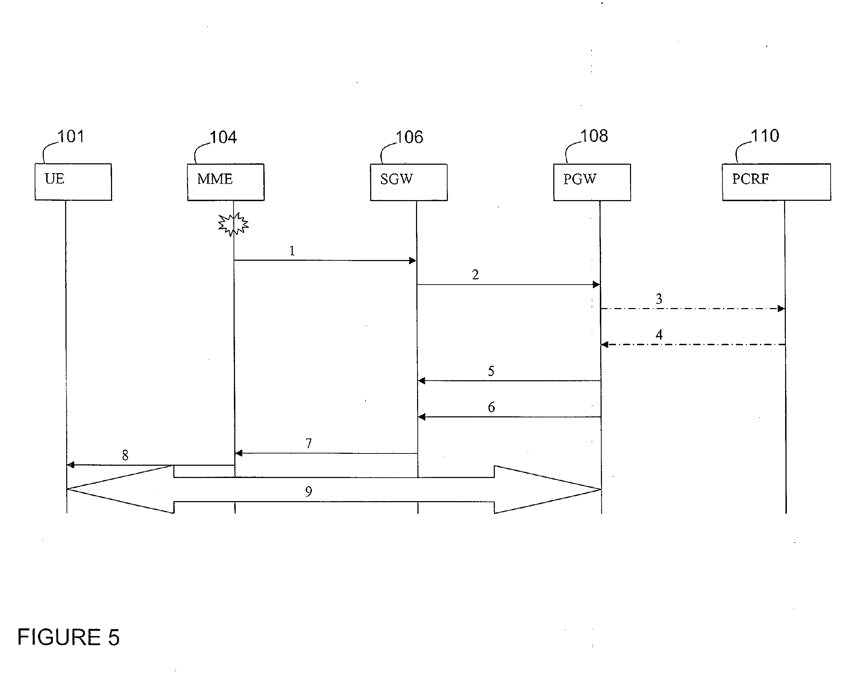

Figure 5 is a message sequence diagram illustrating another example of where some of the example embodiments may be applied. Specifically, Figure 5 illustrates a message sequence diagram of an MME restart.

After a MME restarts, the P-GW may receive a Delete PDN Connection Request from an S-GW for all UEs in the idle state after the serving MME has restarted. The message can be, for example, a "Delete Session Request" with a cause code indicating the MME has been restarted. The S-GW may send such a "Delete Session Request" message for all UEs which were in idle state when MME restarts.

The P-GW may have already stored the TAI or TA list which is assigned by MME before this procedure. For example, the P-GW may get the TA list during Initial attach/TAU/RAU procedures. The P-GW may also receive User Location Information (ULI) during an Initial Attach or PDP Context Activation procedure. The P-GW can keep track of the User location if a Change Reporting is supported in the EPC network. The P-GW may interact with PCRF to decide if a paging request should be issued now or later when the actual downlink data is received. It should be appreciated that P-GW may keep the PDN connections, i.e., UE IP address so that the UE may be able to receive downlink data if the decision to send a paging request is after the downlink data is received.

It should be appreciated that the same logic may be applied for a GPRS system as well, where the GGSN may store a last RA for each UE, and utilize this information after an SGSN restart to enable paging of any UE. It should also be appreciated that the P-GW issued paging request may be by the P-GW internal configuration, and it may be triggered as result of packet inspection.

As shown in Figure 5, once a MME 104 recovers from a restart, the MME 104 may send an Echo Request or response message to the S-GW 106 (message 1). The Echo Request or response message may comprise an incremented restart counter as well as a new PDN connection establishment signaling. The S-GW 106 may send a Delete Session Request message to P-GW 108 (message 2). The Delete Session Request message may indicate any UEs 101 which were in an idle state when the MME 104 restarted.

The P-GW 108 may inform the PCRF 110 of the idle UEs with an optional message (message 3). Whether or not the PCRF 110 is informed depends on implementation. For example, the P-GW 108 may already receive such indication during an IP-CAN establishment. If the P-GW 108 needs to inform the PCRF 110, the P-GW 108 may use a CCR-final to terminate the Gx session.

The PCRF 110 may acknowledge the termination of IP-CAN session (message 4). The PCRF 110 may also indicate whether the P-GW 108 shall perform a P-GW issued paging request. It should be appreciated, when the UE 101 has multiple PDN connections established through different P-GWs, the same PCRF 110 may be selected. Thus, it is possible for the PCRF 110 to make a decision to select only one P-GW to perform IMSI based paging when other P-GWs may be informed that the MME has restarted and the PDN connection for respective P-GWs are to be deleted.

The P-GW 108 may reply to the S-GW 106 with a Delete Session Response (message 5). Within the same message, the P-GW 108 may indicate if a subsequent paging message will be issued, for example, if the P-GW 108 receives such instruction from the PCRF 110 or from a configured/stored previous decision.

The P-GW 108 may also send a Downlink Data Notification as a Paging Request or a new GTP message including the IMSI and TAI (or TA list) which may be received during the other procedure such as Attach (message 6). It should be appreciated that it is also possible to comprise a Paging Indication flag in the Delete Session Response message. Based on the indication flag, the S-GW 106 may send a Downlink data notification. Thus, using the indication flag may eliminate the need of message 6.

It should further be appreciated that the paging message or flag indication may be formulated using processing unit 308. The paging message may also be formulated using any information stored in memory unit 306, as well as information provided by the PCEF. Furthermore, the formulated paging message may be provided with the use of any information sent to the P-GW node.

The S-GW may thereafter forward the Downlink Data Notification to the restarted MME 104 (message 7). It should be appreciated that the S-GW 106 may keep associated MME information since it received the indication from the Delete Session Request message (e.g., message 5). The MME 104 may then start an IMSI paging using the received TAI (TA list) in the Downlink Data Notification Request message (e.g., message 7), which may be a modified Network Initiated Service Request procedure (message 8). The UE 101 may reply to the paging request which may be followed by a normal re-attach procedure and the PDN connection may then be restored (message 9).

### CONCLUSION

It should be appreciated that the example embodiments presented herein allow a MME network node to send page request messages (Figure 4, message 7; Figure 5, message 8) to a UE for which it has no contexts. These page requests may be provided based on the information received from the S-GW/P-GW such as IMSI, TAI (orTA list). The MME may also configure a default TA list for this type of paging.

It should be appreciated that the TA list need not be directly transferred to the MME, instead the P-GW may pass TA list index to the MME. When the MME receives TA list index, it may derive the proper TA list. The mapping between TA list index and TA list may be configured by operators. There is also other mechanism, such get TA list from DNS based on the TAI where UE sends Attach request from.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be implemented at least in part by means of both hardware and software, and that several "means", "units" or "devices" may be represented by the same item of hardware.

A "device" as the term is used herein, is to be broadly interpreted to comprise a radiotelephone having ability for Internet/intranet access, web browser, organizer, calendar, a camera (e.g., video and/or still image camera), a sound recorder (e.g., a microphone), and/or global positioning system (GPS) receiver; a personal communications system (PCS) terminal that may combine a cellular radiotelephone with data processing; a personal digital assistant (PDA) that can comprise a radiotelephone or wireless communication system; a laptop; a camera (e.g., video and/or still image camera) having communication ability; and any other computation or communication device capable of transceiving, such as a personal computer, a home entertainment system, a television, smart phone, touch phone, tablet computer, etc.

The above mentioned and described embodiments are only given as examples and should not be limiting to the present invention. Other solutions, uses, objectives, and functions within the scope of the invention as claimed in the below described patent claims should be apparent for the person skilled in the art.

The various embodiments of the present invention described herein is described in the general context of method steps or processes, which may be implemented in one embodiment by a computer program product, embodied in a computer-readable medium, including computer-executable instructions, such as program code, executed by computers in networked environments. A computer-readable medium may comprise removable and non-removable storage devices including, but not limited to, Read Only Memory (ROM), Random Access Memory (RAM), compact discs (CDs), digital versatile discs (DVD), flash memory, EEPROM, etc. Generally, program modules may comprise routines, programs, objects, components, data structures, etc. that perform particular tasks or implement particular abstract data types. Computer-executable instructions, associated data structures, and program modules represent examples of program code for executing steps of the methods disclosed herein. Such instructions may be executed by the processing unit, e.g., central processing unit, microcontroller, microprocessor; field programmable gate array, application specific integrated circuit, digital signal processor, etc. The particular sequence of such executable instructions or associated data structures represents examples of corresponding acts for implementing the functions described in such steps or processes.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Modifications and other embodiments of the disclosed invention(s) will come to mind to one skilled in the art having the benefit of the teachings present in the foregoing descriptions and the associated drawings. Therefore, it is to be understood that the invention(s) is/are not to be limited to the specific embodiments disclosed and that modifications and other embodiments are intended to be comprised within the scope of this disclosure. Although specific terms may be employed herein, they are used in a generic and descriptive sense only and not for purpose of limitation.

## Claims

1. A method in a wireless communications Packet Data Network Gateway, P-GW, **(108, 300)** or a Gateway General Packet Radio Service Support Node, GGSN, **(300)** network node, the method comprising :
obtaining information indicating that a paging request needs to be issued; **characterized by**
formulating the paging request within the P-GW **(108,300)** or GGSN **(300)** network node; and
sending the paging request, using a Downlink Data Notification message or a General Packet Radio Service Tunnelling Protocol, GTP, specific message, to a Serving Gateway, S-GW, network node **(106)**.

2. The method of claim 1, wherein the obtaining further comprises obtaining the information based on a service description of an associated application function.

3. The method of any of claims 1-2, wherein the obtaining further comprises obtaining a mobility and/or idle status of a User Equipment **(101)**.

4. The method of any of claims 2-3, wherein the sending further comprises selecting the S-GW network node **(106)**.

5. The method of any of claims 1-4, wherein the obtaining further comprises obtaining the information which is related to a Mobility Management Entity, MME, or a Serving General Packet Radio Service Support Node, SGSN, network node restart and a User Equipment, UE, idle state.

6. The method of claim 5, wherein the sending further comprises sending a delete session response to the S-GW network node **(106)**.

7. The method of any of claims 1-6, wherein the sending further comprises sending location specific parameters.

8. The method of claim 7, wherein the sending further comprises sending an International Mobile Subscriber Identity, IMSI, a Tracking Area Index, TAI, a duration of a Packet Data Network, PDN, connection, and/or a periodic Tracking Area Update, TAU, timer.

9. A Packet Data Network Gateway, P-GW, **(108, 300)** or a Gateway General Packet Radio Service Support Node, GGSN, **(300)** network node in a wireless communication network, the node comprising:
a receiving unit configured to receive information indicating that a paging request needs to be issued, **characterized by** further comprising;
a processing unit configured to formulate the paging request within the P-GW **(108, 300)** or GGSN **(300)** network node; and
a transmitting unit configured to send the paging request, using a Downlink Data Notification message or a General Packet Radio Service Tunnelling Protocol, GTP, specific message, to a Serving Gateway, S-GW, network node **(106)**.

10. The node of claim 9, wherein the node is further configured to perform the corresponding method of any one of claims 2-8.

11. A communications system comprising a Packet Data network Gateway, P-GW, **(108, 300)** or a Gateway General Packet Radio Service Support Node, GGSN, **(300)** network node according to Claim 9.

12. A computer readable storage medium encoded with computer executable instructions, wherein the instructions, when executed by a Packet Data network Gateway, P-GW, **(108, 300)** or a Gateway General Packet Radio Service Support Node, GGSN, **(300)** network node, perform the corresponding method of any one of Claims 1-8.

## Patentansprüche

1. Verfahren in einem Drahtloskommunikations-Packet Data Network Gateway (P-GW) (108, 300) oder einem Gateway General Packet Radio Service Support Node (GGSN) (300)-Netzknoten, wobei das Verfahren Folgendes umfasst:
Erhalten von Informationen, die anzeigen, dass eine Paging-Aufforderung ausgegeben werden muss;
**gekennzeichnet durch**
Formulieren der Paging-Aufforderung innerhalb des P-GW (108, 300) oder GGSN (300)-Netzknotens; und
Senden der Paging-Aufforderung, unter Verwendung einer Downlink Data Notification-Nachricht oder einer General Packet Radio Service Tunnelling Protocol (GTP)-spezifischen Nachricht, an einen Serving Gateway (S-GW)-Netzknoten (106).

2. Verfahren nach Anspruch 1, wobei das Erhalten des Weiteren das Erhalten die Informationen anhand einer Dienstbeschreibung einer zugehörigen Anwendungsfunktion umfasst.

3. Verfahren nach einem der Ansprüche 1-2, wobei das Erhalten des Weiteren das Erhalten eines Mobilitäts- und/oder Leerlaufstatus eines Teilnehmergerätes (101) umfasst.

4. Verfahren nach einem der Ansprüche 2-3, wobei das Senden des Weiteren das Auswählen des S-GW-Netzknotens (106) umfasst.

5. Verfahren nach einem der Ansprüche 1 - 4, wobei das Erhalten des Weiteren das Erhalten der Informationen umfasst, die mit einer Mobility Management Entity (MME) oder einem Serving General Packet Radio Service Support Node (SGSN)-Netzknoten-Neustart und einem Teilnehmergerät (UE)-Leerlaufzustand in Beziehung stehen.

6. Verfahren nach Anspruch 5, wobei das Senden des Weiteren das Senden einer Löschungssitzungsantwort an den S-GW-Netzknoten (106) umfasst.

7. Verfahren nach einem der Ansprüche 1-6, wobei das Senden des Weiteren das Senden positionsspezifischer Parameter umfasst.

8. Verfahren nach Anspruch 7, wobei das Senden des Weiteren das Senden einer International Mobil Subscriber Identity (IMSI), eines Tracking Area Index (TAI), einer Dauer einer Packet Data Network (PDN)-Verbindung und/oder eines periodischen Tracking Area Update (TAU)-Timers umfasst.

9. Packet Data Network Gateway (P-GW) (108, 300) oder Gateway General Packet Radio Service Support Node (GGSN) (300)-Netzknoten in einem Drahtloskommunikationsnetz, wobei der Knoten Folgendes umfasst:
eine Empfangseinheit, die dafür konfiguriert ist, Informationen zu empfangen, die anzeigen, dass eine Paging-Aufforderung ausgegeben werden muss, **dadurch gekennzeichnet, dass** er des Weiteren Folgendes umfasst:
eine Verarbeitenseinheit, die dafür konfiguriert ist, die Paging-Aufforderung innerhalb des P-GW (108, 300) oder GGSN (300)-Netzknotens zu formulieren; und
eine Sendeeinheit, die dafür konfiguriert ist, die Paging-Aufforderung, unter Verwendung einer Downlink Data Notification-Nachricht oder einer General Packet Radio Service Tunnelling Protocol (GTP)-spezifischen Nachricht, an einen Serving Gateway (S-GW)-Netzknoten (106) zu senden.

10. Knoten nach Anspruch 9, wobei der Knoten des Weiteren dafür konfiguriert ist, das entsprechende Verfahren nach einem der Ansprüche 2-8 auszuführen.

11. Kommunikationssystem, das einen Packet Data Network Gateway (P-GW) (108, 300) oder einen Gateway General Packet Radio Service Support Node (GGSN) (300)-Netzknoten nach Anspruch 9 umfasst.

12. Durch einen Computer lesbares Speichermedium, das mit durch einen Computer ausführbaren Anweisungen codiert ist, wobei die Anweisungen, wenn sie durch einen Packet Data Network Gateway (P-GW) (108, 300) oder einen Gateway General Packet Radio Service Support Node (GGSN) (300)-Netzknoten ausgeführt werden, das entsprechende Verfahren nach einem der Ansprüche 1-8 ausführen.

## Revendications

1. Procédé dans une passerelle de réseau de paquets de données de communication sans fil, P-GW (108, 300) ou un noeud de réseau de noeud de prise en charge des services GPRS de passerelle, GGSN (300), le procédé comprenant les étapes consistant à :
obtenir une information indiquant qu'une demande de radiorecherche doit être émise ; **caractérisé par**
formuler la demande de radio recherche à l'intérieur du noeud de réseau P-GW (108, 300) ou GGSN (300) ; et
envoyer la demande de radio recherche, en utilisant un message de notification de données de liaison descendante ou un message spécifique de protocole de tunnelisation GPRS, GTP, vers un noeud de réseau de passerelle de desserte, S-GW (106).

2. Procédé selon la revendication 1, dans lequel l'obtention comprend en outre d'obtenir l'information sur la base d'une description des services d'une fonction d'application associée.

3. Procédé selon une quelconque des revendications 1-2, dans lequel l'obtention comprend en outre d'obtenir un statut de mobilité et/ou de repos d'un équipement d'utilisateur (101).

4. Procédé selon une quelconque des revendications 1-4, dans lequel l'envoi comprend en outre de sélectionner le noeud de réseau S-GW (106).

5. Procédé selon une quelconque des revendications 1-4, dans lequel l'obtention comprend en outre d'obtenir l'information qui est relative à une entité de gestion de mobilité, MME, ou un redémarrage d'un noeud de réseau de noeud de prise en charge de services GPRS de desserte, SGSN, et un état de repos d'équipement d'utilisateur, UE.

6. Procédé selon la revendication 5, dans lequel l'envoi comprend en outre d'envoyer une réponse à une suppression de session au noeud de réseau S-GW (106).

7. Procédé selon une quelconque des revendications 1-6, dans lequel l'envoi comprend en outre d'envoyer des paramètres spécifiques de localisation.

8. Procédé selon la revendication 7, dans lequel l'envoi comprend en outre d'envoyer une identité d'abonné mobile international, IMSI, un index de zone de suivi, TAI, une durée d'une connexion de réseau de paquets de données, PDN, et/ou un temporisateur de mise à jour de zone de suivi périodique, TAU.

9. Passerelle de réseau de paquets de données, P-GW (108, 300) ou noeud de réseau de noeud de prise en charge des services GPRS de passerelle, GGSN (300) dans un réseau de communication sans fil, le noeud comprenant :
une unité de réception configurée pour recevoir une information indiquant qu'une demande de radiorecherche doit être émise, **caractérisée en ce qu'**elle comprend en outre
une unité de traitement configurée pour formuler la demande de radio recherche à l'intérieur du noeud de réseau P-GW (108, 300) ou GGSN (300) ; et
une unité de transmission configurée pour envoyer la demande de radio recherche, en utilisant un message de notification de données en liaison descendante ou un message spécifique à un protocole de tunnelisation de services GPRS, GTP, vers un noeud de réseau (106) d'une passerelle de desserte, S-GW.

10. Noeud selon la revendication 9, dans lequel le noeud est en outre configuré pour effectuer le procédé correspondant à une quelconque des revendications 2-8.

11. Système de communication comprenant une passerelle de réseau de paquets de données de communication sans fil, P-GW (108, 300) ou un noeud de réseau de noeud de prise en charge des services GPRS de passerelle, GGSN (300), selon la revendication 9.

12. Support de mémorisation lisible par ordinateur codé avec des instructions exécutables par ordinateur, dans lequel les instructions, quand elles sont exécutées par une passerelle de réseau de paquets de données de communication sans fil, P-GW (108, 300) ou un noeud de réseau de noeud de prise en charge des services GPRS de passerelle, GGSN (300), effectuent le procédé correspondant à une quelconque des revendications 1-8.
